(19) Europäisches Patentamt
European Patent Office
Office européen des brevets

(11) **EP 4 787 395 A1**

(12) **EUROPEAN PATENT APPLICATION**
published in accordance with Art. 153(4) EPC

(43) Date of publication:
**05.08.2026 Bulletin 2026/32**

(21) Application number: **24871583.1**

(22) Date of filing: **20.08.2024**

(51) International Patent Classification (IPC):
*H01B 1/10* [(2006.01)]  *C03C 3/32* [(2006.01)]
*C03C 4/14* [(2006.01)]  *C03C 10/00* [(2006.01)]
*C03C 10/16* [(2006.01)]  *H01B 1/06* [(2006.01)]
*H01B 13/00* [(2006.01)]  *H01M 4/62* [(2006.01)]
*H01M 10/052* [(2010.01)]  *H01M 10/0562* [(2010.01)]

(52) Cooperative Patent Classification (CPC):
**C03C 3/32; C03C 4/14; C03C 10/00; C03C 10/16;**
**H01B 1/06; H01B 1/10; H01B 13/00; H01M 4/62;**
**H01M 10/052; H01M 10/0562;** Y02E 60/10

(86) International application number:
**PCT/JP2024/029427**

(87) International publication number:
**WO 2025/069781 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.09.2023 JP 2023168392**

(71) Applicant: **AGC Inc.**
**Tokyo 100-8405 (JP)**

(72) Inventors:
• **KITAMURA, Riku**
  **Tokyo 100-8405 (JP)**
• **FUJII, Naoki**
  **Tokyo 100-8405 (JP)**

(74) Representative: **Müller-Boré & Partner**
**Patentanwälte PartG mbB**
**Friedenheimer Brücke 21**
**80639 München (DE)**

(54) **SULFIDE SOLID ELECTROLYTE AND METHOD FOR MANUFACTURING SAME**

(57) The present invention relates to a sulfide solid electrolyte containing 60 mass% or more of a sulfide-based glass phase, wherein: the sulfide solid electrolyte contains Li, P, and S as constituent elements; the composition of the sulfide solid electrolyte satisfies $Li/P \geq 2.5$; and the lithium ion conductivity at 25°C when the sulfide solid electrolyte is formed into a green compact at 380 MPa is more than 1 mS/cm.

*FIG. 1*

```
┌─────────────────────────────────┐
│         RAW MATERIALS           │
└─────────────────────────────────┘
              │   · · · S1: MIX
              ▼
┌─────────────────────────────────┐
│      RAW MATERIAL MIXTURE       │
└─────────────────────────────────┘
              │   · · · S2: HEAT
              ▼
┌─────────────────────────────────┐
│             MELT                │
└─────────────────────────────────┘
              │   · · · S3: COOL AND SOLIDIFY
              ▼
┌─────────────────────────────────┐
│ GLASS PHASE (SULFIDE SOLID      │
│         ELECTROLYTE)            │
└─────────────────────────────────┘
```

EP 4 787 395 A1

**Description**

TECHNICAL FIELD

The present invention relates to a sulfide solid electrolyte and a method for producing the same.

BACKGROUND ART

Lithium ion secondary batteries are widely used in portable electronic devices such as a mobile phone and a notebook computer, motor vehicles, or the like.

In the related art, a liquid electrolyte has been used in a lithium ion secondary battery, but there is a concern of liquid leakage, ignition, and the like, and it is necessary to increase the size of a case for safety design. It has also been desired to improve the short battery life and the narrow operating temperature range.

In contrast, attention has been paid to an all-solid-state lithium secondary battery in which a solid electrolyte is used as an electrolyte of a lithium ion secondary battery, from the viewpoint of improving safety, charging and discharging at a high speed, and reducing the size of the case.

The solid electrolytes are roughly classified into sulfide solid electrolytes and oxide solid electrolytes. Sulfide ions constituting the sulfide solid electrolytes have polarizability and an ion conductivity higher than those of oxide ions constituting the oxide solid electrolytes. As the sulfide solid electrolytes, there has been known LGPS crystals such as $Li_{10}GeP_2S_{12}$, argyrodite crystals such as $Li_6PS_5Cl$, LPS crystallized glasses such as $Li_7P_3S_{11}$ crystallized glass, and the like.

In an all-solid-state battery using a solid electrolyte, interface contact between an active material and a solid electrolyte is important. Therefore, a soft material that easily forms an interface is required for the solid electrolyte. Examples of the soft material include a glass material.

As an ion conductor of a sulfide-based glass, $(Li_4P_2S_7)_{1-x}$-$LiI_x$ ($0 \leq x \leq 0.45$)-based glasses are disclosed in Non Patent Literature 1. Patent Literature 1 discloses LPSI-based or LPSBr-based glasses.

CITATION LIST

PATENT LITERATURE

Patent Literature 1: JP2013-201110A

NON-PATENT LITERATURE

Non Patent Literature 1: R. Mercier et al., SUPERIONIC CONDUCTION IN Li2S-P2S5-LiI-GLASSES, Solid State Ionics 5(1981)663-666

SUMMARY OF INVENTION

TECHNICAL PROBLEM

The sulfide-based glass described in Non Patent Literature 1 is produced by a melt quenching method, and the sulfide-based glass described in Patent Literature 1 is produced by a mechanical milling method.

However, these glass materials in the related art have insufficient battery characteristics when used as a solid electrolyte.

Specifically, a sulfide solid electrolyte containing the sulfide-based glass produced by the melt quenching method has a high ion conductivity, but has low oxidation resistance. A sulfide solid electrolyte containing the sulfide-based glass produced by the mechanical milling method has a low ion conductivity, and thus has poor high-rate characteristics.

Therefore, an object of the present invention is to provide a sulfide solid electrolyte containing a sulfide-based glass phase having excellent oxidation resistance and high-rate characteristics, and a method for producing the same.

SOLUTION TO PROBLEM

As a result of intensive studies, the present inventors have found that the above problems can be solved by, in obtaining a sulfide-based glass phase by melting raw materials through heating followed by cooling, performing the heating and cooling under ambient pressure and performing the cooling at an extremely high cooling rate, and have completed the present invention.

That is, the present invention relates to the following [1] to [10].

[1] A sulfide solid electrolyte including 60 mass% or more of a sulfide-based glass phase, in which the sulfide solid electrolyte includes Li, P, and S as constituent elements,

a composition of the sulfide solid electrolyte satisfies $Li/P \geq 2.5$, and
the sulfide solid electrolyte has a lithium ion conductivity of more than 1 mS/cm at 25°C when formed into a powder compact at 380 MPa.

[2] The sulfide solid electrolyte according to [1],

in which the sulfide solid electrolyte further includes Ha as a constituent element,
the Ha is at least one selected from the group consisting of F, Cl, Br, and I, and
the composition of the sulfide solid electrolyte further satisfies $[(F + Cl + Br)/Ha] \geq 0.5$.

[3] The sulfide solid electrolyte according to [1] or [2], in which the composition of the sulfide solid electrolyte further satisfies $Li/P \leq 7.0$.
[4] The sulfide solid electrolyte according to any one of [1] to [3], in which an amount of $H_2S$ generated when the sulfide solid electrolyte is held in an atmosphere having a dew point of -20°C for 5 hours is 1.0 mL/g or less.
[5] The sulfide solid electrolyte according to any one of [1] to [4], in which the composition of the sulfide solid electrolyte satisfies Li: 30 at% to 50 at%, P: 5 at% to 15 at%, S: 30 at% to 60 at%, and Ha: 1 at% to 12 at%.
[6] A method for producing a sulfide solid electrolyte, which is a method for producing a sulfide solid electrolyte including 60 mass% or more of a glass phase, the method including: in order,

mixing raw materials to obtain a raw material mixture containing Li, P, and S;
heating the raw material mixture to obtain a melt; and
cooling and solidifying the melt to obtain the glass phase,
in which the heating and the cooling and solidifying are performed under ambient pressure, and
a cooling rate during the cooling and solidifying is 100°C/sec or more.

[7] The method for producing a sulfide solid electrolyte according to [6], in which a melting temperature during the heating is 600°C to 800°C.
[8] The method for producing a sulfide solid electrolyte according to [6] or [7], in which a composition of the sulfide solid electrolyte satisfies $Li/P \geq 2.5$.
[9] The method for producing a sulfide solid electrolyte according to [8], in which the composition of the sulfide solid electrolyte further satisfies $Li/P \leq 7$.
[10] The method for producing a sulfide solid electrolyte according to any one of [6] to [9],

in which the heating is performed under a pressure of gauge pressure $\pm$ 10 kPa, and
a composition ratio represented by [P/Li] of the sulfide solid electrolyte to a composition ratio represented by [P/Li] of the raw material mixture is 95% to 105%.

ADVANTAGEOUS EFFECTS OF INVENTION

According to the present invention, a sulfide solid electrolyte containing a sulfide-based glass phase having excellent oxidation resistance and excellent high-rate characteristics can be obtained. Therefore, when the sulfide solid electrolyte is used in an all-solid-state lithium secondary battery, favorable battery characteristics can be achieved.

BRIEF DESCRIPTION OF DRAWINGS

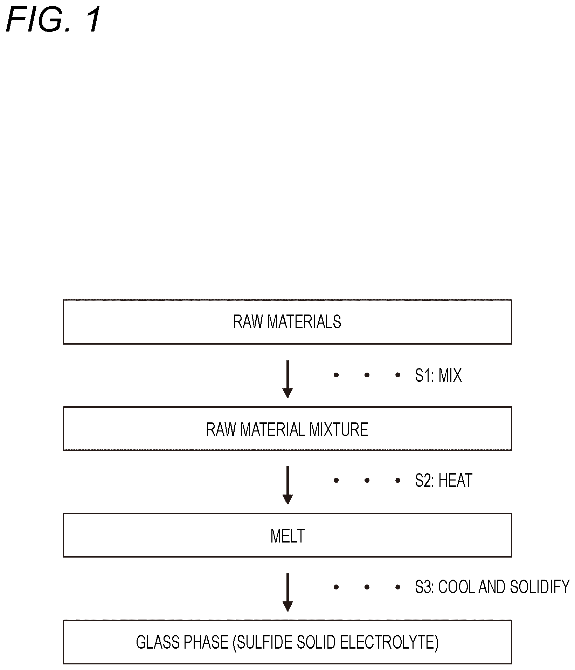

FIG. 1 is a flow diagram illustrating a method for producing a sulfide solid electrolyte according to the present embodiment.

DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

<<Sulfide Solid Electrolyte>>

A sulfide solid electrolyte according to the present embodiment contains 60 mass% or more of a sulfide-based glass phase. The sulfide solid electrolyte contains Li, P, and S as constituent elements, and a composition thereof satisfies Li/P ≥ 2.5.
The sulfide solid electrolyte has a lithium ion conductivity of more than 1 mS/cm at 25°C when formed into a powder compact at 380 MPa.
The sulfide solid electrolyte according to the present embodiment contains Li, P, and S as constituent elements. In addition to these, it is preferable to contain Ha from the viewpoint of a lithium ion conductivity. Here, the Ha is at least one selected from the group consisting of F, Cl, Br, and I, and it is preferable to contain at least one of Cl and Br, and it is more preferable to contain Br, from the viewpoint of obtaining favorable oxidation resistance and favorable water resistance. It is also more preferable to contain both Cl and Br.
In the composition of the sulfide solid electrolyte according to the present embodiment, the composition ratio represented by Li/P is 2.5 or more, more preferably 2.5 to 7.0, still more preferably 3.0 to 6.5, and even more preferably 3.2 to 6.2.
Here, from the viewpoint of achieving a high lithium ion conductivity, the above composition ratio is 2.5 or more, preferably 3.0 or more, and more preferably 3.2 or more. From the viewpoint of widening a vitrification range, the above composition ratio is preferably 7.0 or less, more preferably 6.5 or less, and still more preferably 6.2 or less.
In the present description, the composition ratio means the ratio of the contents (at%) of the respective elements in the sulfide solid electrolyte.
In the composition of the sulfide solid electrolyte according to the present embodiment, the composition ratio represented by S/P is preferably 3.0 to 5.0, more preferably 3.5 to 4.5, and still more preferably 3.8 to 4.2. Here, from the viewpoint of the lithium ion conductivity, the composition ratio is preferably 3.0 or more, more preferably 3.5 or more, and still more preferably 3.8 or more. From the viewpoint of the water resistance, the composition ratio is preferably 5.0 or less, more preferably 4.5 or less, and still more preferably 4.2 or less.
When the sulfide solid electrolyte further contains Ha, the composition ratio represented by [(F+Cl+Br)/Ha] is preferably 0.5 or more, more preferably 0.5 to 1.0, still more preferably 0.6 to 1.0, and particularly preferably 0.8 to 1.0. Here, from the viewpoint of the oxidation resistance, the composition ratio is preferably 0.5 or more, more preferably 0.6 or more, and still more preferably 0.8 or more. An upper limit of the composition ratio is not particularly limited, and the composition ratio may be 1.0. The composition ratio of 1.0 means that I is not contained as Ha. When the sulfide solid electrolyte contains I as Ha, the composition ratio may be 0.8 or less or 0.6 or less, from the viewpoint of obtaining the effect of I.
When the sulfide solid electrolyte further contains Ha, in the composition of the sulfide solid electrolyte according to the present embodiment, the composition ratio represented by Ha/P is preferably 0.01 to 1.5, more preferably 0.1 to 1.2, and still more preferably 0.2 to 1.0. Here, from the viewpoint of the water resistance, the composition ratio is preferably 0.01 or more, more preferably 0.1 or more, and still more preferably 0.2 or more. From the viewpoint of precipitation of lithium halide crystals, the composition ratio is preferably 1.5 or less, more preferably 1.2 or less, and still more preferably 1.0 or less. Here, Ha means the total of F, Cl, Br, and I.
More specifically, the composition of the sulfide solid electrolyte according to the present embodiment preferably satisfies Li: 30 at% to 50 at%, P: 5 at% to 15 at%, and S: 30 at% to 60 at%, and more preferably satisfies Li: 30 at% to 50 at%, P: 5 at% to 15 at%, S: 30 at% to 60 at%, and Ha: 1 at% to 12 at%. In the present description, at% means atom%, that is, atomic%.
In the sulfide solid electrolyte according to the present embodiment, Li is an element responsible for ion conduction as a solid electrolyte.
In the composition of the sulfide solid electrolyte, the content of Li is preferably 30 at% to 50 at%, more preferably 35 at% to 45 at%, and still more preferably 37 at% to 43 at%. Here, from the viewpoint of increasing the lithium ion conductivity, the content of Li is preferably 30 at% or more, more preferably 35 at% or more, and still more preferably 37 at% or more. From the viewpoint of widening the vitrification range, the content of Li is preferably 50 at% or less, more preferably 45 at% or less, and still more preferably 43 at% or less.
In the sulfide solid electrolyte according to the present embodiment, P is an element that forms a network of glass, and a P-S bond has high resistance to both oxidation and reduction among sulfides. Therefore, the solid electrolyte has a wide potential window and excellent electrochemical stability.
In the composition of the sulfide solid electrolyte, the content of P is preferably 5 at% to 15 at%, more preferably 6 at% to 13 at%, and still more preferably 7 at% to 12 at%. Here, from the viewpoint of widening the vitrification range, the content of P is preferably 5 at% or more, more preferably 6 at% or more, and still more preferably 7 at% or more. From the viewpoint of increasing the lithium ion conductivity, the content of P is preferably 15 at% or less, more preferably 13 at% or less, and still more preferably 12 at% or less.

In the sulfide solid electrolyte according to the present embodiment, S is an element that forms a P-S bond together with P, and is an essential element for forming a glass phase.

In the composition of the sulfide solid electrolyte, the content of S is preferably 30 at% to 60 at%, more preferably 33 at% to 50 at%, and still more preferably 35 at% to 47 at%. Here, from the viewpoint of widening the vitrification range, the content of S is preferably 30 at% or more, more preferably 33 at% or more, and still more preferably 35 at% or more. From the viewpoint of increasing the lithium ion conductivity, the content of S is preferably 60 at% or less, more preferably 50 at% or less, and still more preferably 47 at% or less.

When the sulfide solid electrolyte according to the present embodiment contains Ha, Ha is an element that contributes to a high lithium ion conductivity.

In the composition of the sulfide solid electrolyte, the content of Ha is preferably 1 at% to 12 at%, more preferably 3 at% to 10 at%, and still more preferably 3.5 at% to 8 at%. From the viewpoint of obtaining the high lithium ion conductivity, the content of Ha is preferably 1 at% or more, more preferably 3 at% or more, and still more preferably 3.5 at% or more. From the viewpoint of preventing precipitation of lithium halide crystals, the content of Ha is preferably 12 at% or less, more preferably 10 at% or less, and still more preferably 8 at% or less. Here, the content of Ha means the total content of F, Cl, Br, and I.

Ha is at least one selected from the group consisting of F, Cl, Br, and I, and as described above, it is preferable to contain at least one of Cl and Br, and it is more preferable to contain Br, from the viewpoint of obtaining favorable oxidation resistance and favorable water resistance. It is also more preferable to contain both Cl and Br.

For example, in the content of Ha, the total content of Cl and Br is preferably 50 % or more, more preferably 70 % or more, and may be 100 at%, that is, Ha may only include Cl and Br. Further, the content ratio represented by Cl:Br is preferably 100:0 to 0:100, more preferably 80:20 to 0:100, and still more preferably 60:40 to 0:100.

The sulfide solid electrolyte according to the present embodiment may contain elements other than the above Li, P, S, and Ha as the constituent elements. Examples of the other elements that may be contained include Si, B, Ge, Al, O, Na, K, Mg, Ca, Sr, Ba, Y, Zr, Cr, Zn, Ga, Sn, and Sb.

When the other elements form oxides such as $SiO_2$, $B_2O_3$, $P_2O_5$, or $Al_2O_3$, such oxides are preferably not contained since the oxides may act as a crystal nucleus. The total content of the oxides is preferably 1 mol% or less, more preferably 0.1 mol% or less, and still more preferably 0.05 mol% or less, in terms of mol% based on oxides, and the oxides may be absent, that is, 0 mol%.

The sulfide solid electrolyte according to the present embodiment may contain, for example, Si, B, Ge, Al, Sn, and Sb among the other elements. The Si, B, Ge, Al, Sn, and Sb are elements that can occupy the P site when the sulfide-based glass phase is crystallized.

When the sulfide solid electrolyte according to the present embodiment contains Si as the constituent element, Si has an effect of increasing the viscosity of the molten liquid to promote vitrification. The content of Si is preferably 0 at% to 15 at%, more preferably 0.1 at% to 10 at%, and still more preferably 1 at% to 5 at%. Here, from the viewpoint of suitably obtaining the effect of Si, the content of Si is preferably 0.1 at% or more, and more preferably 1 at% or more. From the viewpoint of electrochemical stability, the content of Si is preferably 15 at% or less, more preferably 10 at% or less, and still more preferably 5 at% or less.

However, when Si has a Si-O bond or is contained as an oxide of $SiO_2$, as described above, the content of Si is appropriately adjusted such that the total content of the oxides is 1 mol% or less, or such that the total content of oxides serving as a glass network former is 3 mol% to 20 mol%.

When the sulfide solid electrolyte according to the present embodiment contains B as the constituent element, B has an effect of increasing the viscosity of the molten liquid to promote vitrification. The content of B is preferably 0 at% to 15 at%, more preferably 0.1 at% to 10 at%, and still more preferably 1 at% to 5 at%. Here, from the viewpoint of suitably obtaining the effect of B, the content of B is preferably 0.1 at% or more, and more preferably 1 at% or more. From the viewpoint of the lithium ion conductivity, the content of B is preferably 15 at% or less, more preferably 10 at% or less, and still more preferably 5 at% or less.

However, when B has a B-O bond or is contained as an oxide of $B_2O_3$, as described above, the content of B is appropriately adjusted such that the total content of the oxides is 1 mol% or less, or such that the total content of oxides serving as a glass network former is 3 mol% to 20 mol%.

When the sulfide solid electrolyte according to the present embodiment contains Ge as the constituent element, Ge has an effect of promoting improvement in lithium ion conductivity. The content of Ge is preferably 0 at% to 15 at%, more preferably 0.1 at% to 10 at%, and still more preferably 1 at% to 5 at%. Here, from the viewpoint of the lithium ion conductivity, the content of Ge is preferably 0.1 at% or more, and more preferably 1 at% or more. From the viewpoint of ease of glass formation, the content of Ge is preferably 15 at% or less, more preferably 10 at% or less, and still more preferably 5 at% or less.

However, when Ge has a Ge-O bond or is contained as an oxide of $GeO_2$, as described above, the content of Ge is appropriately adjusted such that the total content of the oxides is 1 mol% or less.

When the sulfide solid electrolyte according to the present embodiment contains Al as the constituent element, Al has an effect of increasing the viscosity of the molten liquid to promote vitrification. The content of Al is preferably 0 at% to 15 at%, more preferably 0.1 at% to 10 at%, and still more preferably 1 at% to 5 at%. Here, from the viewpoint of suitably obtaining the effect of Al, the content of Al is preferably 0.1 at% or more, and more preferably 1 at% or more. From the viewpoint of the lithium ion conductivity, the content of Al is preferably 15 at% or less, more preferably 10 at% or less, and still more preferably 5 at% or less.

However, when Al has an Al-O bond or is contained as an oxide of $Al_2O_3$, as described above, the content of Al is appropriately adjusted such that the total content of the oxides is 1 mol% or less, or such that the total content of oxides serving as a glass network former is 3 mol% to 20 mol%.

When the sulfide solid electrolyte according to the present embodiment contains Sn as the constituent element, Sn has an effect of increasing the viscosity of the molten liquid to promote vitrification. The content of Sn is preferably 0 at% to 15 at%, more preferably 0.1 at% to 10 at%, and still more preferably 1 at% to 5 at%. Here, from the viewpoint of suitably obtaining the effect of Sn, the content of Sn is preferably 0.1 at% or more, and more preferably 1 at% or more. From the viewpoint of achieving the high lithium ion conductivity, the content of Sn is preferably 15 at% or less, more preferably 10 at% or less, and still more preferably 5 at% or less.

However, when Sn has a Sn-O bond or is contained as an oxide of $SnO_2$, as described above, the content of Sn is appropriately adjusted such that the total content of the oxides is 1 mol% or less.

When the sulfide solid electrolyte according to the present embodiment contains Sb as the constituent element, Sb has an effect of increasing the viscosity of the molten liquid to promote vitrification. The content of Sb is preferably 0 at% to 15 at%, more preferably 0.1 at% to 10 at%, and still more preferably 1 at% to 5 at%. Here, from the viewpoint of suitably obtaining the effect of Sb, the content of Sb is preferably 0.1 at% or more, and more preferably 1 at% or more. From the viewpoint of the lithium ion conductivity, the content of Sb is preferably 15 at% or less, more preferably 10 at% or less, and still more preferably 5 at% or less.

However, when Sb has a Sb-O bond or is contained as an oxide of $Sb_2O_3$, as described above, the content of Sb is appropriately adjusted such that the total content of the oxides is 1 mol% or less, or such that the total content of oxides serving as a glass network former is 3 mol% to 20 mol%.

Methods for determining the constituent elements of the sulfide solid electrolyte and the contents (composition ratios) thereof differ depending on the element. For example, P and S are determined by ICP emission spectroscopy, Li is determined by atomic absorption spectroscopy, and Ha is determined by ion chromatography. Details of each analysis are described later in the section of Examples.

In the sulfide solid electrolyte according to the present embodiment, the sulfide-based glass phase constituting the sulfide solid electrolyte may be crystallized by a heat treatment. In this case, the crystalline phase formed by crystallization of the sulfide-based glass phase may have a Thio-Lisicon or LGPS crystal structure. The Thio-Lisicon or LGPS crystalline phase has a high lithium ion conductivity, and can also be used as a solid electrolyte.

The proportion of the sulfide-based glass phase in the sulfide solid electrolyte according to the present embodiment is 60 mass% or more, preferably 60 mass% to 100 mass%, more preferably 65 mass% to 95 mass%, and still more preferably 70 mass% to 90 mass%. Here, from the viewpoint of the lithium ion conductivity, the proportion of the sulfide-based glass phase is 60 mass% or more, more preferably 65 mass% or more, and still more preferably 70 mass% or more. The proportion of the sulfide-based glass phase may be 100 mass%, that is, the sulfide solid electrolyte may be composed only of the sulfide-based glass phase. On the other hand, when obtaining the sulfide-based glass phase, a crystalline phase may also form, making it time-consuming and costly to obtain only the sulfide-based glass phase. Therefore, from the viewpoint of productivity of the sulfide solid electrolyte, the proportion of the sulfide-based glass phase is preferably 95 mass% or less, and more preferably 90 mass% or less.

The proportion of the sulfide-based glass phase is determined by powdering the sulfide solid electrolyte, performing a powder X-ray diffraction (XRD) measurement together with a crystal powder serving as an internal standard, determining a proportion of crystals, and performing Rietveld analysis by subtracting the proportion from 100 mass%.

The constituent elements and the composition ratios of the sulfide-based glass phase in the present embodiment can be regarded as substantially the same as the constituent elements and the composition ratios of the sulfide solid electrolyte according to the present embodiment. The difference in constituent elements and composition ratios between the two becomes smaller as the proportion of the sulfide-based glass phase in the sulfide solid electrolyte becomes higher.

Therefore, a preferred aspect of the constituent elements and the composition ratios of the sulfide solid electrolyte can be read as a preferred aspect of the constituent elements and the composition ratios of the sulfide-based glass phase.

<Other Phases>

The sulfide solid electrolyte according to the present embodiment may include phases other than the sulfide-based glass phase. As the other phases, for example, as described above, the crystalline phase formed when producing the sulfide-based glass phase is exemplified.

The total proportion of such other phases in the sulfide solid electrolyte is 40 mass% or less, preferably 1 mass% to 40 mass%, more preferably 2 mass% to 35 mass%, and still more preferably 5 mass% to 30 mass%. Here, from the viewpoint of sufficiently exhibiting the characteristics of the sulfide-based glass phase, the total proportion of the other phases is 40 mass% or less, preferably 35 mass% or less, and more preferably 30 mass% or less. The other phases may be absent, but from the viewpoint of the productivity of the sulfide solid electrolyte, the total proportion of the other phases is preferably 1 mass% or more, more preferably 2 mass% or more, and still more preferably 5 mass% or more.

<Physical Properties of Sulfide Solid Electrolyte>

The sulfide solid electrolyte according to the present embodiment has a lithium ion conductivity of more than 1 mS/cm at 25°C when formed into a powder compact at 380 MPa. This is due to the high lithium ion conductivity of the sulfide-based glass phase. Since it is difficult to extract only the sulfide-based glass phase from the sulfide solid electrolyte, the level of the lithium ion conductivity of the sulfide-based glass phase is evaluated by the lithium ion conductivity of the sulfide solid electrolyte containing 60 mass% or more of the sulfide-based glass phase.

The reason why the lithium ion conductivity of the sulfide-based glass phase in the present embodiment is higher than that of the sulfide-based glass in the related art is not entirely clear, but it is considered that this may be due to the fact that even a so-called glass phase (amorphous phase) is not a completely irregular structure devoid of any regular atomic arrangement. That is, the sulfide-based glass phase in the present embodiment is a glass phase having a certain degree of order, that is, a periodic structure, and is believed to contribute to achieving high lithium ion conductivity.

The lithium ion conductivity of the sulfide solid electrolyte according to the present embodiment may be more than 1 mS/cm, and a value thereof changes depending on the composition or the proportion of the sulfide-based glass phase.

For example, the lithium ion conductivity in a composition in which the Br content of Ha is 90 at% or more is more preferably 1.3 mS/cm or more, and the lithium ion conductivity in a composition in which the Cl content of Ha is 90 at% or more is more preferably 1.1 mS/cm or more.

The lithium ion conductivity in the present description can be obtained by an AC impedance measurement using, as a measurement sample, a powder compact obtained by compacting a powder of the sulfide solid electrolyte at 380 MPa. Specifically, the AC impedance measurement of the measurement sample is performed at a measurement frequency of 100 Hz to 1 MHz, a measurement voltage of 100 mV, and a measurement temperature of 25°C, and a value determined from the obtained Nyquist plot is regarded as the lithium ion conductivity.

The amount of $H_2S$ generated when the sulfide solid electrolyte according to the present embodiment is held in an atmosphere having a dew point of -20°C for 5 hours is preferably 10 mL/g or less, more preferably 1 mL/g or less, still more preferably 0.1 mL/g or less, and the smaller the more preferred.

More specific measurement conditions of the amount of $H_2S$ generated are as follows.

First, the sulfide solid electrolyte is passed through a 100 $\mu$m mesh to obtain a powder having an average particle size of 10 $\mu$m to 20 $\mu$m. Then, the amount of hydrogen sulfide ($H_2S$) generated, as measured when 10 mg of such a powder is exposed for 5 hours under a flow of nitrogen ($N_2$) gas humidified to a dew point of -20°C at a flow rate of 0.5 L/min, is monitored, and the total amount thereof is defined as the amount of $H_2S$ generated.

The amount of $H_2S$ generated is a value serving as an index of hydrolysis resistance, that is, water resistance of the sulfide solid electrolyte, and can be achieved by setting the content of the sulfide-based glass phase to 60 mass% or more or by incorporating Ha as the constituent element. In particular, it is preferable to contain at least one of Cl and Br as Ha, and it is more preferable to contain Br. It is also more preferable to contain both Cl and Br.

The average particle size (D50) of the sulfide solid electrolyte according to the present embodiment is preferably 5 $\mu$m to 300 $\mu$m, more preferably 10 $\mu$m to 200 $\mu$m, and still more preferably 10 $\mu$m to 150 $\mu$m. Here, from the viewpoint of reducing a load in a fine pulverization step when the sulfide solid electrolyte is used in a secondary battery, the average particle size is preferably 300 $\mu$m or less, more preferably 200 $\mu$m or less, and still more preferably 150 $\mu$m or less. From the viewpoint of handling the powder, the average particle size is preferably 5 $\mu$m or more, and more preferably 10 $\mu$m.

The average particle size (D50) can be adjusted by performing coarse pulverization on the obtained sulfide solid electrolyte. The coarse pulverization may be performed by a known method in the related art, such as a cutter mill, a planetary ball mill, or a jet mill, and dry pulverization is preferred.

The sulfide solid electrolyte according to the present embodiment is suitable as an electrolyte of a lithium ion secondary battery. When the sulfide solid electrolyte is used for a lithium ion secondary battery, the sulfide solid electrolyte forms a solid electrolyte layer together with other components such as a binder as necessary. As the binder or other components, known substances according to the related art can be used.

The content of the sulfide solid electrolyte according to the present embodiment with respect to the entire solid electrolyte layer is preferably 80 mass% or more, and more preferably 90 mass% or more.

The sulfide solid electrolyte according to the present embodiment may be used as a positive electrode layer or a negative electrode layer by being mixed with a positive electrode active material or a negative electrode active material. As the positive electrode active material or negative electrode active material used for the positive electrode layer or negative electrode layer, a current collector, a binder, a conductive aid, and the like, known materials according to the related art can be used.

The lithium ion secondary battery includes the positive electrode layer, the solid electrolyte layer, and the positive electrode layer, and the sulfide solid electrolyte according to the present embodiment is preferably contained in at least one layer selected from the group consisting of the positive electrode layer, the solid electrolyte layer, and the positive electrode layer.

As a material of an outer casing of the lithium ion secondary battery, known materials according to the related art may also be used. As a shape of the lithium ion secondary battery, known shapes according to the related art may be used. Examples thereof include a coin shape, a sheet shape (film shape), a folded shape, a wound cylindrical shape with a bottom, and a button shape. The shape thereof can be appropriately selected according to the application.

<<Method for Producing Sulfide Solid Electrolyte>>

The method for producing a sulfide solid electrolyte according to the present embodiment includes the following step 1 to step 3 in order as step S1 to step S3 as shown in FIG. 1.

Step S1: step 1 of mixing raw materials to obtain a raw material mixture containing Li, P, and S
Step S2: step 2 of heating the raw material mixture obtained in step 1 to obtain a melt
Step S3: step 3 of cooling and solidifying the melt obtained in step 2 to obtain a glass phase

The heating in step 2 and the cooling and solidifying in step 3 are performed under ambient pressure, and a cooling rate in the cooling and solidifying is 100°C/sec or more. Accordingly, a sulfide solid electrolyte containing 60 mass% or more of a glass phase can be obtained. In the present description, the expression "under ambient pressure" means a pressure range of about (gauge pressure $\pm$ 15 kPa).

In the above step 1, the sulfide solid electrolyte described in the above <<Sulfide Solid Electrolyte>> is obtained by mixing raw materials such that the composition of the obtained sulfide solid electrolyte satisfies Li/P $\geq$ 2.5.

Each step is described below.

<Step 1>

Step S1 in the present embodiment is step 1 of mixing raw materials to obtain a raw material mixture containing Li, P, and S.

Specifically, the raw material mixture is obtained by mixing a raw material containing a Li element, a raw material containing a P element, and a raw material containing an S element. When it is desired to obtain a glass phase further containing Ha as the constituent element, in addition to the raw material containing the Li element, the raw material containing the P element, and the raw material containing the S element, a raw material containing an Ha element is further mixed to obtain a raw material mixture containing Li, P, S, and Ha. Here, the Ha element is at least one element selected from the group consisting of F, Cl, Br, and I.

Examples of the raw material containing the Li element include lithium compounds such as lithium sulfide ($Li_2S$), lithium carbonate ($Li_2CO_3$), lithium sulfate ($Li_2SO_4$), lithium oxide ($Li_2O$), and lithium hydroxide (LiOH), and metallic lithium. The substances containing the Li element may be used alone or in combination of two or more kinds thereof.

As the raw material containing the Li element, lithium sulfide is preferably used from the viewpoint of obtaining the sulfide-based glass phase. In the case where the obtained sulfide solid electrolyte contains a halogen element, a lithium halide (LiHa, Ha is a halogen element) is also preferred as the raw material containing the Li element. The lithium halide is to be described later.

Examples of the raw material containing the P element include phosphorus sulfides such as phosphorus pentasulfide ($P_2S_5$) and phosphorus trisulfide ($P_2S_3$), phosphorus compounds such as sodium phosphate ($Na_3PO_4$), and elemental phosphorus. The substances containing the P element may be used alone or in combination of two or more kinds thereof.

The raw material containing the P element is preferably phosphorus sulfides, and more preferably phosphorus pentasulfide ($P_2S_5$), from the viewpoint of preventing incorporation of elements other than the elements constituting the target sulfide solid electrolyte.

Examples of the raw material containing the S element include lithium sulfide ($Li_2S$), phosphorus sulfides such as phosphorus trisulfide ($P_2S_3$) and phosphorus pentasulfide ($P_2S_5$), other sulfur compounds containing phosphorus, and a sulfur-containing compound. Examples of the sulfur-containing compound include $H_2S$, $CS_2$, iron sulfides (such as FeS, $Fe_2S_3$, $FeS_2$, and $Fe_{1-x}S$), bismuth sulfide ($Bi_2S_3$), and copper sulfides (such as CuS, $Cu_2S$, and $Cu_{1-x}S$). The substances containing the S element may be used alone or in combination of two or more kinds thereof.

The raw material containing the S element is preferably lithium sulfide or phosphorus sulfides, and more preferably phosphorus pentasulfide ($P_2S_5$) as the phosphorus sulfide, from the viewpoint of preventing the incorporation of elements other than the elements constituting the target sulfide solid electrolyte. Lithium sulfide is a compound serving as both the raw material containing the Li element and the raw material containing the S element, and phosphorus sulfide is a compound serving as both the raw material containing the S element and the raw material containing the P element.

Examples of the raw material containing the Ha element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. The substances containing the Ha element may be used alone or in combination of two or more kinds thereof.

From the viewpoint of reactivity, the raw material containing the Ha element is preferably lithium halides, more preferably LiCl, LiBr, or LiI, and still more preferably LiCl or LiBr.

The raw material mixture may be obtained by mixing raw materials further containing other elements in accordance with a desired composition of the sulfide solid electrolyte.

As described above, examples of the other elements include Si, B, Ge, Al, O, Na, K, Mg, Ca, Sr, Ba, Y, Zr, Cr, Zn, Ga, Sn, and Sb. Among the other elements, for example, Si, B, Ge, Al, Sn, and Sb may be contained. Si, B, Ge, Al, Sn, and Sb are elements that can occupy the P site when the sulfide-based glass phase is crystallized.

As the raw material containing the other elements, a known material in the related art can be used.

Examples of the raw material containing the Si element include $SiO_2$ and $SiS_2$. Among them, $SiO_2$ is more preferred from the viewpoint of the lithium ion conductivity. These compounds may be used alone or in combination of two or more kinds thereof.

Examples of the raw material containing the B element include $B_2O_3$ and $B_2S_3$. Among them, $B_2O_3$ is more preferred from the viewpoint of the water resistance of the glass. These compounds may be used alone or in combination of two or more kinds thereof.

Examples of the raw material containing the Ge element include $GeO_2$, $GeS$, $GeS_2$, and $GeCl_2$. Among them, from the viewpoint of the lithium ion conductivity, $GeS_2$ and $GeCl_2$ are preferred, and $GeS_2$ is more preferred. These compounds may be used alone or in combination of two or more kinds thereof.

Examples of the raw material containing the Al element include $Al_2S_3$, $Al_2O_3$, and $AlCl_3$. Among them, from the viewpoint of the lithium ion conductivity and the water resistance, $Al_2S_3$ and $AlCl_3$ are preferred, and $Al_2S_3$ is more preferred. These compounds may be used alone or in combination of two or more kinds thereof.

Examples of the raw material containing the Sn element include $SnS$, $SnS_2$, $SnO$, $SnO_2$, and $SnCl_2$. Among them, from the viewpoint of the lithium ion conductivity, $SnS_2$ and $SnCl_2$ are preferred, and $SnS_2$ is more preferred. These compounds may be used alone or in combination of two or more kinds thereof.

Examples of the raw material containing the Sb element include $Sb_2S_3$, $Sb_2O_3$, $Sb_2O_5$, $SbCl_3$, and $SbCl_5$. Among them, from the viewpoint of the lithium ion conductivity and the water resistance, $Sb_2S_3$ and $SbCl_3$ are preferred, and $Sb_2S_3$ is more preferred. These compounds may be used alone or in combination of two or more kinds thereof.

These raw materials are appropriately blended according to the composition of the sulfide solid electrolyte to be obtained. Specifically, in order to obtain the sulfide solid electrolyte described in the above <<Sulfide Solid Electrolyte>>, the raw materials are mixed such that the composition of the sulfide solid electrolyte satisfies Li/P $\geq$ 2.5. The composition of the sulfide solid electrolyte preferably further satisfies Li/P $\leq$ 7.

In addition to the above, a preferred embodiment of the obtained sulfide solid electrolyte is the same as the preferred embodiment of the above <<Sulfide Solid Electrolyte>>.

It is preferable to reduce a particle size of each raw material from the viewpoint of shortening a holding time in the heating and melting in the subsequent step 2. When the particle size of the raw material is too large, the homogeneity of the sulfide solid electrolyte may be affected, and it is preferable that the particle size of the raw material is small to some extent from such a viewpoint. However, the production method according to the present embodiment is excellent in composition controllability. Therefore, for example, even when a raw material having a particle size that can reduce the homogeneity in a production method in the related art is used, a more homogeneous sulfide solid electrolyte can be produced in the production method according to the present embodiment.

From the above viewpoint, specifically, the particle size of each raw material is preferably 1 mm or less, more preferably 500 $\mu$m or less, still more preferably 250 $\mu$m or less, even more preferably 100 $\mu$m or less, and particularly preferably 50 $\mu$m or less. The smaller the particle size, the more preferred, the practical lower limit thereof is actually about 0.1 $\mu$m, and the particle size may be 1 $\mu$m or more or 5 $\mu$m or more.

As described above, according to the production method of the present embodiment, even when a raw material having a relatively large particle size is used, a homogeneous sulfide solid electrolyte is easily obtained. In consideration of this, for example, from the viewpoint of reducing the production cost, the particle size of each raw material may be 10 $\mu$m or more, may be 100 $\mu$m or more, or may be 250 $\mu$m or more.

Accordingly, the particle size of each raw material is preferably 0.1 $\mu$m to 1 mm, more preferably 1 $\mu$m to 500 $\mu$m, still more preferably 5 $\mu$m to 250 $\mu$m, even more preferably 5 $\mu$m to 100 $\mu$m, and particularly preferably 5 $\mu$m to 50 $\mu$m.

From the viewpoint of the production cost, the particle size of each raw material is preferably 10 μm to 1 mm, more preferably 100 μm to 1 mm, and still more preferably 250 μm to 500 μm.

In the present description, the particle size of each raw material refers to an average particle size (D50) represented by a median size determined from a chart of a volume-based particle size distribution obtained by measuring a particle size distribution using a laser diffraction particle size distribution analyzer MT3300EXII manufactured by Microtrac.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

<Step 2>

Step S2 in the present embodiment is step 2 of heating the raw material mixture obtained in step 1 to obtain a melt.

A specific method for heating and melting the raw material mixture is not particularly limited except that the heating is performed under ambient pressure.

In the production method according to the present embodiment, a compositional deviation between the composition of the raw material mixture and the composition of the obtained sulfide solid electrolyte is small by performing the heating for melting the raw material mixture under ambient pressure. Further, by performing the heating in a gas atmosphere containing an S element, the compositional deviation can be further prevented. In the production method according to the present embodiment, the heating and melting is performed in an environment in which an atmosphere is controlled under ambient pressure, and it is not necessary to perform the heating and melting in a sealed tube. However, the use of the sealed tube is not excluded at all.

Here, a difference between the sealed tube and the environment in which the atmosphere is controlled under ambient pressure is that the pressure inside the sealed tube is under vacuum, that is, less than (gauge pressure - 15 kPa), whereas the pressure inside the container during the heating and melting in the environment in which the atmosphere is controlled under ambient pressure is within a range of (gauge pressure ± 15 kPa).

That is, in the production method according to the present embodiment, the heating and melting in step 2 is performed under ambient pressure of (gauge pressure ± 15 kPa). At this time, the composition ratio represented by [P/Li] of the obtained sulfide solid electrolyte with respect to the composition ratio represented by [P/Li] of the raw material mixture is preferably 95% to 105%.

The pressure during the heating and melting may be under ambient pressure of (gauge pressure ± 15 kPa), and is preferably (gauge pressure ± 10 kPa), more preferably (gauge pressure ± 5 kPa), and still more preferably (gauge pressure ± 2 kPa).

At this time, the composition ratio represented by [P/Li] of the obtained sulfide solid electrolyte with respect to the composition ratio represented by [P/Li] of the raw material mixture is more preferably 95% to 105%, still more preferably 97% to 103%, and even more preferably 99% to 101%, and the closer to 100%, the more preferred. Here, the above composition ratio is preferably 95% or more, more preferably 97% or more, and still more preferably 99% or more, and is preferably 105% or less, more preferably 103% or less, and still more preferably 101% or less.

Regarding the composition ratio represented by [P/Li] of the obtained sulfide solid electrolyte with respect to the composition ratio represented by [P/Li] of the raw material mixture, Li is an element that is less volatile, and P is an element that is more volatile. Therefore, comparison of the composition ratios represented by [P/Li] between the raw material mixture and the sulfide solid electrolyte is appropriate as an index of the compositional deviation between the composition of the raw material mixture and the composition of the obtained sulfide solid electrolyte.

Examples of the heat-resistant container containing the raw material mixture include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. These heat-resistant containers may have a bulk formed of the above material, or may be a container having a layer made of carbon, an oxide, a nitride, a carbide, or the like, such as a carbon-coated quartz tube.

The melting temperature when the raw material mixture is heated varies depending on the raw materials to be used and the composition of the raw material mixture, and is, for example, preferably 600°C to 950°C, more preferably 630°C to 850°C, and still more preferably 650°C to 750°C. Here, the melting temperature is preferably 600°C or higher, more preferably 630°C or higher, and still more preferably 650°C or higher, from the viewpoint of the reaction rate. From the viewpoint of preventing the compositional deviation due to volatilization of the components, the melting temperature is preferably 950°C or lower, more preferably 850°C or lower, and still more preferably 750°C or lower.

The time for the heating and melting varies depending on a scale, and is preferably 10 minutes to 10 hours, more preferably 30 minutes to 9.5 hours, still more preferably 45 minutes to 9 hours, and particularly preferably 1 hour to 9 hours. Here, from the viewpoint of allowing the reaction to proceed smoothly, the time for the heating and melting is preferably 10 minutes or longer, more preferably 30 minutes or longer, still more preferably 45 minutes or longer, and particularly preferably 1 hour or longer. From the viewpoint of productivity, the time for the heating and melting is preferably 10 hours or shorter, more preferably 9.5 hours or shorter, and still more preferably 9 hours or shorter.

The atmosphere in the container during the heating and melting is not particularly limited. For example, the atmosphere may be a nitrogen atmosphere, an argon atmosphere, or a gas atmosphere containing an S element. Among them, the gas atmosphere containing an S element is preferred from the viewpoint of more suitably preventing the compositional deviation.

When using the gas atmosphere containing an S element, examples of the S element source include a sulfur gas, a hydrogen sulfide gas, and a sulfur dioxide gas, and it is preferable to contain a sulfur gas from the viewpoint of reactivity with the raw material.

The introduction of the gas containing an S element may be achieved by adding an elemental sulfur powder and vaporizing it by heating during the heating and melting to form the gas containing an S element. The elemental sulfur powder may be added together with the raw materials when mixing the raw materials to obtain the raw material mixture, or may be separately added after the raw material mixture is obtained. When the elemental sulfur powder is added together with the raw materials to obtain the raw material mixture, a mass of the elemental sulfur powder is not included in the mass of the obtained raw material mixture.

As the gas containing an S element, the sulfur gas, the hydrogen sulfide gas, the sulfur dioxide gas, or the like may be introduced, and the gas containing an S element obtained by adding the elemental sulfur powder may be introduced together.

As the gas containing an S element, a gas serving as the S element source may be used as a mixed gas with, for example, an inert gas. The mixing proportion with the inert gas is free, and is not particularly limited as long as a cumulative introduction amount of the S element with respect to the mass of the raw material mixture can be a desired value.

Examples of the inert gas include a nitrogen gas, an argon gas, and a helium gas, which may be used alone or in combination of two or more kinds thereof.

The dew point during the heating and melting is preferably -20°C or lower, a lower limit thereof is not particularly limited, and the dew point is generally about -80°C. The oxygen concentration is preferably 1,000 ppm by volume or less.

The dissolution of the melt of the raw material mixture in step 2 can be confirmed by the absence of a peak derived from a crystal in a high-temperature X-ray diffraction measurement. It can also be confirmed by heating at a predetermined temperature and tilting the melt to confirm the presence or absence of fluidity.

<Step 3>

Step S3 in the present embodiment is step 3 of cooling and solidifying the melt obtained in step 2 to obtain a glass phase.

The cooling and solidifying is performed under ambient pressure. Here, ambient pressure means an atmosphere under a pressure of about (gauge pressure ± 15 kPa) as described above.

The pressure during the cooling and solidifying may be under ambient pressure of (gauge pressure ± 15 kPa), and is preferably (gauge pressure ± 10 kPa), more preferably (gauge pressure ± 5 kPa), and still more preferably (gauge pressure ± 2 kPa).

The cooling rate in the cooling and solidifying may be 100°C/sec or more, preferably 100°C/sec to 100,000°C/sec, more preferably 500°C/sec to 50,000°C/sec, and still more preferably 1,000°C/sec to 10,000°C/sec. Here, it has been found that the sulfide solid electrolyte containing Li, P, and S as the constituent elements and including 60 mass% or more of the sulfide-based glass phase can be obtained by performing ultra-rapid cooling at a cooling rate of 100°C/sec or more, which is higher than that in the related art.

Since the sulfide-based glass phase can achieve a lithium ion conductivity higher than that of the sulfide-based glass in the related art, the lithium ion conductivity of the sulfide solid electrolyte can also be increased. By performing the cooling and solidifying under ambient pressure, the compositional deviation between the composition in the raw material mixture and the composition of the obtained sulfide solid electrolyte can also be reduced.

The cooling rate is 100°C/sec or more, and from the viewpoint of ease of glass formation, the cooling rate is preferably 500°C/sec or more, and more preferably 1,000°C/sec or more. The upper limit of the cooling rate is not particularly limited, and from the viewpoint of facility capacity the cooling rate is preferably 100,000°C/sec or less, more preferably 50,000°C/sec or less, and still more preferably 10,000°C/sec or less.

The ultra-rapid cooling as described above can be achieved by using, for example, twin roll rapid cooling.

The sulfide solid electrolyte including 60 mass% or more of the glass phase obtained as described above may be used as it is in at least one or more selected from the group consisting of a positive electrode layer, a solid electrolyte layer, and a negative electrode layer, or may be used after pulverization, drying, or the like according to the application or the like.

Further, the sulfide solid electrolyte according to the present embodiment may be subjected to a heat treatment at a temperature equal to or higher than a crystallization temperature of the glass phase to crystallize at least a part of the glass phase, and used as described above. In this case, the crystalline phase derived from the glass phase may have a Thio-Lisicon or LGPS crystal structure having a high lithium ion conductivity.

EXAMPLES

Hereinafter, the present invention is specifically described with reference to Examples, but the present invention is not limited thereto.
Example 1 to Example 5 are Inventive Examples, and Example 6 to Example 8 are Comparative Examples.

<<Test Example>>

<Example 1>

Under a dry nitrogen gas atmosphere, a lithium sulfide powder (manufactured by Sigma, purity 99.98%), a phosphorus pentasulfide powder (manufactured by Sigma, purity 99%), and a lithium bromide powder (manufactured by Sigma, purity 99.995%) were weighed so as to have a composition ratio of $Li_{3.4}P_{1.0}S_{4.0}Br_{0.3}$, and mixed in a mortar to obtain a raw material mixture (step 1).
The obtained raw material mixture was put into a carbon container under an S element-containing nitrogen atmosphere having a dew point of -50°C or lower and containing a sulfur powder (manufactured by Sigma, purity 99.998%) as an S element source, and the container was put into an electric furnace inside a glove box, and heated at a pressure of gauge pressure + 1 kPa and a temperature of 750 °C for 1 hour to obtain a melt (step 2).
Next, the tip of the container was heated and melted, and the molten liquid, which is a melt, was poured onto twin rolls and cooled to room temperature at a cooling rate of 10,000°C/sec to obtain a sulfide solid electrolyte (step 3). The pressure at this time was (gauge pressure + 1 kPa), and the cooling rate was adjusted by the discharge rate of the molten liquid, roll gap of the twin rolls, and rotation speed.

<Example 2, Example 3, and Example 6>

The sulfide solid electrolyte was obtained in the same manner as in Example 1, except that the cooling rate of the melt obtained by heating was changed to 5,000°C/sec (Example 2), 1,000°C/sec (Example 3), or 50°C/sec (Example 6).

<Example 4, Example 5, and Example 7>

The sulfide solid electrolyte was obtained in the same manner as in Example 1, except that the raw material mixture was obtained by weighing and mixing raw materials so as to have a composition ratio of $Li_{3.7}P_{1.0}S_{4.0}Br_{0.3}$ (Example 4), $Li_{3.4}P_{1.0}S_{4.0}Cl_{0.1}Br_{0.2}$ (Example 5), or $Li_{3.3}P_{1.0}S_{3.5}I_{1.3}$ (Example 7), and a cooling rate was changed to 5,000°C/sec (Example 4), 10,000°C/sec (Example 5), or 50°C/sec (Example 7). In Example 5, a lithium chloride powder (manufactured by Sigma, purity: 99.995%) was further used as the raw material, and in Example 7, a lithium iodide powder (manufactured by Sigma, purity: 99.99%) was further used as the raw material.

<Example 8>

Under a dry nitrogen gas atmosphere, a lithium sulfide powder (manufactured by Sigma, purity 99.98%), a phosphorus pentasulfide powder (manufactured by Sigma, purity 99%), and a lithium bromide powder (manufactured by Sigma, purity 99.995%) were weighed so as to have a composition ratio of $Li_{3.4}P_{1.0}S_{4.0}Br_{0.3}$, and mixed in a mortar to obtain a raw material mixture.
The obtained raw material mixture was further mixed using a planetary ball mill (manufactured by Fritsch, P-7) to obtain a sulfide solid electrolyte. The mixing by the planetary ball mill was performed by mechanical milling at 400 rpm for 20 hours in a nitrogen atmosphere using a zirconia pot and zirconia balls having a particle size of 4 mm. The dew point during operation was maintained at -70°C or lower.

<<Evaluation>>

<Composition of Sulfide-Based Glass Phase>

The obtained sulfide solid electrolyte was weighed in a glove box, dissolved in an alkaline aqueous solution, and subjected to compositional analysis for each element.
Specifically, P and S were subjected to ICP emission spectrometry (device: model number PS3520UVDDII, manufactured by Hitachi High-Tech Science Corporation).

Li was analyzed by atomic absorption spectroscopy (device: model number ZA3300, manufactured by Hitachi High-Tech Corporation; CsCl was added to give a solution concentration of 0.1% in Li measurement).

Cl, Br and I were analyzed by ion chromatography (device: model number ICS-2100 (column: AS11HC) manufactured by Thermo Fisher Scientific K.K.; a small amount of $H_2O_2$ was added and diluted with ultrapure water for a measurement).

The results are shown in the item of "Overall" under "Composition" in Table 1. The overall composition here is a blended composition in which P is normalized to 1.0. In each of Examples, the composition of the obtained sulfide solid electrolyte did not greatly deviate from the composition of the raw material mixture. The composition ratio represented by [P/Li] of the obtained sulfide solid electrolyte with respect to a composition ratio represented by [P/Li] of the raw material mixture is shown in "compositional deviation (%)" in Table 1.

<Proportion of Sulfide-based Glass Phase>

The obtained sulfide solid electrolyte was pulverized in a mortar and then passed through a 100 $\mu$m sieve to obtain a powder having an average particle size (D50) of about 20 $\mu$m, which was used as a sample.

Using an X-ray diffraction (XRD) apparatus (manufactured by Rigaku Corporation, Smart Lab), measurements were performed under the following conditions: X-ray source: CuK$\alpha$ radiation ($\lambda$=1.5418 Å), tube voltage: 45 kV, tube current: 200 mA, scan angle: 10° to 60°, scan speed: 5°/min, step size: 0.01°/step, under an atmosphere without exposure to air.

From the obtained XRD pattern, the proportion of the crystalline phase and the sulfide-based glass phase was determined using a calibration curve based on a weight ratio of the crystalline phase contained in the sulfide solid electrolyte and Si as the internal standard substance. The proportion of the sulfide-based glass phase is shown in Table 1.

<Lithium Ion Conductivity>

The obtained sulfide solid electrolyte was pulverized in a mortar and then passed through a 100 $\mu$m sieve to obtain a powder having an average particle size (D50) of about 20 $\mu$m, which was used as a sample.

The sample was compressed under a pressure of 380 MPa to prepare a powder compact as a measurement sample, and measured by using an electrochemical impedance spectroscopy (potentiostat/galvanostat VSP, manufactured by Bio-Logic Sciences Instruments). The measurement conditions were a measurement frequency of 100 Hz to 1 MHz, a measurement voltage of 100 mV, and a measurement temperature of 25°C, and the lithium ion conductivity was determined from the obtained Nyquist plot. The results were shown in "$\sigma^{Li+}$ (mS/cm)" in Table 1.

<Battery Characteristic>

The sulfide solid electrolyte was dry-pulverized under a dry nitrogen atmosphere by a planetary ball mill (model number LP-M2, manufactured by Ito Seisakusho Co., Ltd.) using an alumina ball having a particle size of 2 mm. Next, the pulverized sulfide solid electrolyte was passed through a sieve having an opening of 43 $\mu$m to obtain a sulfide solid electrolyte powder having a particle size distribution with an average particle size (D50) of 3 $\mu$m.

The average particle size (D50) was measured by determining the particle size distribution using a laser diffraction particle size distribution analyzer MT3300EXII manufactured by Microtrac, and then calculated from the chart of the obtained volume-based particle size distribution.

A material obtained by coating lithium niobate on a rock-salt-type layered NMC811 powder (purchased from MTI Corporation, volume average particle size: 11.75 $\mu$m) was used as a positive electrode active material, and 34 parts by mass of the sulfide solid electrolyte powder prepared above, 60 parts by mass of the positive electrode active material, and 6 parts by mass of a conductive aid (acetylene black, manufactured by Denka Company Limited, HS100) were mixed to prepare a positive electrode mixture.

Into a plastic cylinder having a diameter of 10 mm, 80 mg of the sulfide solid electrolyte powder prepared above was charged and pressure-molded to form a solid electrolyte layer. Next, 6 mg of the positive electrode mixture prepared above was charged into the same cylinder, and pressure-molded again to form a positive electrode layer. Further, an indium foil and a lithium foil were charged from a side opposite to the positive electrode mixture to form a negative electrode layer. An all-solid-state lithium ion secondary battery was prepared in this manner, and a charge and discharge test was performed at a confining pressure of 10 kN.

•Oxidation Resistance Test

In the charge and discharge test, a constant current charge and discharge test was conducted for 10 cycles under the following conditions: measurement temperature: 25°C, charge current density: 0.1 C, discharge current density: 0.1 C, and charge and discharge potential range: 1.9 V to 3.9 V.

From the results of the charge and discharge test, the capacity retention ratio (%) represented by the following formula was determined, respectively, and battery characteristics of the all-solid-state lithium ion secondary battery were evaluated.

Capacity retention (%) = (discharge capacity in tenth cycle/discharge capacity in first cycle) $\times$ 100

The results of the battery characteristics are shown in the item of "oxidation resistance test" in Table 1. The criteria for the determination were as follows.

    A: Capacity retention was more than 90%
    B: Capacity retention was more than 80% and 90% or less
    C: Capacity retention was 80% or less

•C-rate Test

In the charge and discharge test, first, a discharge capacity when one cycle of the charge and discharge was performed under the following conditions: measurement temperature: 25°C, charge current density: 0.1 C, discharge current density: 0.1 C, and charge and discharge potential range: 1.9 V to 3.9 V was determined. Thereafter, the discharge capacity when one cycle of the charge and discharge was performed under the following conditions: measurement temperature: 25°C, charge current density: 3.0 C, discharge current density: 3.0 C, and charge and discharge potential range: 1.9 V to 3.9 V was determined.

From the results of the charge and discharge test, the capacity retention (%) represented by the following formula was determined, and the battery characteristics of the all-solid-state lithium ion secondary battery were evaluated.

Capacity retention (%) = (discharge capacity at 3.0 C/discharge capacity at 0.1 C) $\times$ 100

The results of the battery characteristics are shown in the item of "C-rate test" in Table 1. The criteria for the determination were as follows.

    A: Capacity retention was more than 50%
    B: Capacity retention was more than 10% and 50% or less
    C: Capacity retention was 10% or less

<Water Resistance>

The obtained sulfide solid electrolyte was pulverized in a mortar and then passed through a 100 $\mu$m sieve to obtain a powder having an average particle size (D50) of about 20 $\mu$m, which was used as a sample.

Then, 10 mg of the sample was exposed for 5 hours under a flow of humidified $N_2$ gas having a dew point of -20°C, and the concentration of hydrogen sulfide in the gas was monitored to determine the total amount of hydrogen sulfide generated. The humidified $N_2$ gas was flowed at 0.5 L/min.

Thus, by detecting the total amount of hydrogen sulfide generated, hydrolysis resistance was evaluated as an index of water resistance. As a detection tube, a hydrogen sulfide concentration meter (Model 3000RS, manufactured by TEKHNE Corporation) was used. The results are shown in "Generation amount of $H_2S$ (mL/g)" in Table 1.

[Table 1]

| | | Composition | | | Production method | Cooling rate (°C/sec) | Compositional deviation (P/Li comparison) (%) |
|---|---|---|---|---|---|---|---|
| | | Overall | Li/P | (F+Cl+Br)/Ha | | | |
| Example 1 | | $Li_{3.4}P_{1.0}S_{4.0}Br_{0.3}$ | 3.4 | 1 | Melt quenching method | 10000 | 99 |
| Example 2 | | $Li_{3.4}P_{1.0}S_{4.0}Br_{0.3}$ | 3.4 | 1 | Melt quenching method | 5000 | 98 |
| Example 3 | | $Li_{3.4}P_{1.0}S_{4.0}Br_{0.3}$ | 3.4 | 1 | Melt quenching method | 1000 | 98 |
| Example 4 | | $Li_{3.7}P_{1.0}S_{4.0}Br_{0.3}$ | 3.7 | 1 | Melt quenching method | 5000 | 97 |
| Example 5 | | $Li_{3.4}P_{1.0}S_{4.0}Cl_{0.1}Br_{0.2}$ | 3.4 | 1 | Melt quenching method | 10000 | 98 |

(continued)

| | Composition | | | Production method | Cooling rate (°C/sec) | Compositional deviation (P/Li comparison) (%) |
|---|---|---|---|---|---|---|
| | Overall | Li/P | (F+Cl+Br)/Ha | | | |
| Example 6 | $Li_{3.4}P_{1.0}S_{4.0}Br_{0.3}$ | 3.4 | 1 | Melt quenching method | 50 | 98 |
| Example 7 | $Li_{3.3}P_{1.0}S_{3.5}I_{1.3}$ | 3.3 | 0 | Melt quenching method | 50 | 98 |
| Example 8 | $Li_{3.4}P_{1.0}S_{4.0}Br_{0.3}$ | 3.4 | 1 | Mechanical milling method | - | 100 |

(Table 1 continued)

| | Sulfide-based glass phase proportion (mass%) | $\sigma^{Li+}$ (mS/cm) | Battery characteristics | | Generation amount of $H_2S$ (mL/g) |
|---|---|---|---|---|---|
| | | | Oxidation resistance test | C-rate test | |
| Example 1 | More than 95% | 1.5 | A | A | 0 |
| Example 2 | 90% | 1.4 | A | A | 0.02 |
| Example 3 | 70% | 1.2 | A | A | 0.10 |
| Example 4 | 90% | 1.1 | A | A | 0.04 |
| Example 5 | More than 95% | 1.1 | A | A | 0.05 |
| Example 6 | 30% | 0.5 | A | C | 20 |
| Example 7 | More than 95% | 1.0 | C | B | 50 |
| Example 8 | More than 95% | 0.5 | A | B | 1 |

From the above results, it was found that the sulfide solid electrolyte according to the present embodiment had a high lithium ion conductivity of more than 1 mS/cm even though the proportion of the glass phase was 60 mass% or more, and was excellent in cycle characteristics and rate characteristics from the results of the oxidation resistance test and the C-rate test. The above effects were obtained not only in the case of $Li_{3.4}P_{1.0}S_{4.0}Br_{0.3}$, but also in the case where the amount of Li was large as in Example 4, and in the case where a halogen element other than Br was contained as Ha as in Example 5.

From the comparison of Example 1 to Example 3, it is found that a higher lithium ion conductivity can be achieved by containing a large amount of the sulfide-based glass phase thereby reducing the content of the devitrified crystalline phase. The content of the glass phase is adjusted by the cooling rate.

On the other hand, as shown in Example 6, when the cooling rate by twin roll rapid cooling was small, the proportion of the obtained sulfide-based glass phase was as low as 30 mass%, and as a result, the lithium ion conductivity was also low. As shown in Example 7, even when iodine, which is expected to have a high lithium ion conductivity, was used as the halogen element, the lithium ion conductivity was only 1.0 mS/cm when the cooling rate by twin roll rapid cooling was low. The proportion of the sulfide-based glass phase in Example 7 was a very high value of more than 95 mass%, and showed a significant difference compared to the proportion of the sulfide-based glass phase in Example 6, which had the same cooling rate. This is considered to be due to the fact that atomic arrangement during cooling, that is, crystallization, is less likely to occur with heavier elements. In Example 7, the proportion of the sulfide-based glass phase is high, but the cooling rate is low, and thus it is considered that the glass phase does not have a certain degree of order as in Example 1 to Example 5.

As shown in Example 8, in the sulfide solid electrolyte obtained by the mechanical milling method, the lithium ion conductivity was low although the proportion of the sulfide-based glass phase was as very high as more than 95 mass%. From this, it was suggested that the sulfide-based glass phase in the present embodiment and the sulfide-based glass phase obtained by the mechanical milling method are both classified as amorphous glass phases, but fine states thereof are different. Specifically, the sulfide-based glass phase in the present embodiment is a glass phase having a certain degree of order, that is, a periodic structure, and it is considered that the sulfide-based glass phase may contribute to achieving the high lithium ion conductivity.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-168392) filed on September 28, 2023, the content of which is incorporated herein by reference.

**Claims**

1. A sulfide solid electrolyte comprising 60 mass% or more of a sulfide-based glass phase,

   wherein the sulfide solid electrolyte comprises Li, P, and S as constituent elements,
   a composition of the sulfide solid electrolyte satisfies $Li/P \geq 2.5$, and
   the sulfide solid electrolyte has a lithium ion conductivity of more than 1 mS/cm at 25°C when formed into a powder compact at 380 MPa.

2. The sulfide solid electrolyte according to claim 1,

   wherein the sulfide solid electrolyte further comprises Ha as a constituent element,
   the Ha is at least one selected from the group consisting of F, Cl, Br, and I, and
   the composition of the sulfide solid electrolyte further satisfies $[(F + Cl + Br)/Ha] \geq 0.5$.

3. The sulfide solid electrolyte according to claim 1 or 2, wherein the composition of the sulfide solid electrolyte further satisfies $Li/P \leq 7.0$.

4. The sulfide solid electrolyte according to claim 1 or 2, wherein an amount of $H_2S$ generated when the sulfide solid electrolyte is held in an atmosphere having a dew point of - 20°C for 5 hours is 1.0 mL/g or less.

5. The sulfide solid electrolyte according to claim 1 or 2, wherein the composition of the sulfide solid electrolyte satisfies Li: 30 at% to 50 at%, P: 5 at% to 15 at%, S: 30 at% to 60 at%, and Ha: 1 at% to 12 at%.

6. A method for producing a sulfide solid electrolyte, which is a method for producing a sulfide solid electrolyte comprising 60 mass% or more of a glass phase, the method comprising: in order,

   mixing raw materials to obtain a raw material mixture comprising Li, P, and S;
   heating the raw material mixture to obtain a melt; and
   cooling and solidifying the melt to obtain the glass phase,
   wherein the heating and the cooling and solidifying are performed under ambient pressure, and
   a cooling rate during the cooling and solidifying is 100°C/sec or more.

7. The method for producing a sulfide solid electrolyte according to claim 6, wherein a melting temperature during the heating is 600°C to 800°C.

8. The method for producing a sulfide solid electrolyte according to claim 6 or 7, wherein a composition of the sulfide solid electrolyte satisfies $Li/P \geq 2.5$.

9. The method for producing a sulfide solid electrolyte according to claim 8, wherein the composition of the sulfide solid electrolyte further satisfies $Li/P \leq 7$.

10. The method for producing a sulfide solid electrolyte according to claim 6 or 7,

    wherein the heating is performed under a pressure of gauge pressure $\pm$ 10 kPa, and
    a composition ratio represented by [P/Li] of the sulfide solid electrolyte to a composition ratio represented by [P/Li] of the raw material mixture is 95% to 105%.

*FIG. 1*

```
┌─────────────────────────────────────────────┐
│                RAW MATERIALS                  │
└─────────────────────────────────────────────┘
                    │
                    │   •   •   •  S1: MIX
                    ▼
┌─────────────────────────────────────────────┐
│             RAW MATERIAL MIXTURE              │
└─────────────────────────────────────────────┘
                    │
                    │   •   •   •  S2: HEAT
                    ▼
┌─────────────────────────────────────────────┐
│                    MELT                       │
└─────────────────────────────────────────────┘
                    │
                    │   •   •   •  S3: COOL AND SOLIDIFY
                    ▼
┌─────────────────────────────────────────────┐
│    GLASS PHASE (SULFIDE SOLID ELECTROLYTE)    │
└─────────────────────────────────────────────┘
```

## INTERNATIONAL SEARCH REPORT

| International application No. |
|---|
| **PCT/JP2024/029427** |

### A. CLASSIFICATION OF SUBJECT MATTER

*H01B 1/10*(2006.01)i; *C03C 3/32*(2006.01)i; *C03C 4/14*(2006.01)i; *C03C 10/00*(2006.01)i; *C03C 10/16*(2006.01)i; *H01B 1/06*(2006.01)i; *H01B 13/00*(2006.01)i; *H01M 4/62*(2006.01)i; *H01M 10/052*(2010.01)i; *H01M 10/0562*(2010.01)i
FI:  H01B1/10; C03C4/14; C03C3/32; C03C10/16; C03C10/00; H01B13/00 Z; H01M10/0562; H01M10/052; H01M4/62 Z; H01B1/06 A

According to International Patent Classification (IPC) or to both national classification and IPC

### B. FIELDS SEARCHED

Minimum documentation searched (classification system followed by classification symbols)

H01B1/10; C03C3/32; C03C4/14; C03C10/00; C03C10/16; H01B1/06; H01B13/00; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2013-118092 A (IDEMITSU KOSAN CO., LTD.) 13 June 2013 (2013-06-13) paragraphs [0009]-[0153], fig. 1-5 | 1-5 |
| A | | 6-10 |
| Y | WO 2023/145658 A1 (AGC INC.) 03 August 2023 (2023-08-03) paragraph [0062] | 1-5 |
| Y | JP 5-306117 A (MATSUSHITA ELECTRIC INDUSTRIAL CO., LTD.) 19 November 1993 (1993-11-19) paragraphs [0055]-[0062], fig. 10 | 6-10 |
| A | | 1-5 |
| Y | WO 2022/080435 A1 (AGC INC.) 21 April 2022 (2022-04-21) paragraphs [0062]-[0068] | 6-10 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 October 2024** | **05 November 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/029427**

| Patent document cited in search report | | | Publication date (day/month/year) | Patent family member(s) | Publication date (day/month/year) |
|---|---|---|---|---|---|
| JP | 2013-118092 | A | 13 June 2013 | US 2014/0315103 A1 paragraphs [0007]-[0258], fig. 1-5 | |
| WO | 2023/145658 | A1 | 03 August 2023 | (Family: none) | |
| JP | 5-306117 | A | 19 November 1993 | (Family: none) | |
| WO | 2022/080435 | A1 | 21 April 2022 | EP 4230579 A1 paragraphs [0090]-[0096] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013201110 A

- JP 2023168392 A

**Non-patent literature cited in the description**

- **R. MERCIER et al.** SUPERIONIC CONDUCTION IN Li2S-P2S5-LiI-GLASSES. *Solid State Ionics*, 1981, vol. 5, 663-666